(19) Europäisches Patentamt / European Patent Office / Office européen des brevets

(11) **EP 4 481 444 A1**

(12) **EUROPEAN PATENT APPLICATION**
published in accordance with Art. 153(4) EPC

(43) Date of publication:
**25.12.2024 Bulletin 2024/52**

(21) Application number: **23918041.7**

(22) Date of filing: **12.04.2023**

(51) International Patent Classification (IPC):
*G01T 1/167* (2006.01)    *G01T 3/00* (2006.01)
*G06F 17/10* (2006.01)    *G21F 9/34* (2006.01)

(52) Cooperative Patent Classification (CPC):
**G01T 1/167; G01T 3/00; G06F 17/10; G21F 9/34**

(86) International application number:
**PCT/KR2023/004920**

(87) International publication number:
**WO 2024/214839 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Korea Atomic Energy Research
Institute
Daejeon 34057 (KR)**

(72) Inventor: **KIM, Ji Seok
Sejong 30130 (KR)**

(74) Representative: **Stolmár & Partner
Patentanwälte PartG mbB
Blumenstraße 17
80331 München (DE)**

(54) **METHOD FOR CALCULATING CONCENTRATION OF RADIOACTIVITY IN RADIOACTIVE WASTE**

(57)    The present invention relates to a method of calculating a radioactivity concentration in radioactive waste. The method is capable of calculating a radioactivity concentration in radioactive waste lower than or equal to a measuring instrument's MDC, by irradiating the radioactive waste with neutrons for a predetermined period of time so that the radioactivity concentration in the radioactive waste is higher than the measuring instrument's MDC, and then calculating a radioactivity concentration in the radioactive waste before the radioactive waste was irradiated with the neutrons using a formula.

FIG. 1

EP 4 481 444 A1

**Description**

[Technical Field]

The present invention relates to a method of calculating a radioactivity concentration in radioactive waste, and more particularly, to a method of calculating a radioactivity concentration in radioactive waste by irradiating the radioactive waste having a radioactivity concentration lower than or equal to a measuring instrument's MDC with neutrons, and then calculating a radioactivity concentration in the radioactive waste before the radioactive waste was irradiated with the neutrons using a formula.

[Background Art]

Concerning Korea's first nuclear reactors, Research Reactors 1 and 2, their operations ceased in 1995, and decommissioning business began in 1997. Radioactive waste generated during a nuclear reactor decommissioning process for about 90 months from June 2001 is about 2,099 tons, of which 1,832 tons are subject to self-disposal. Whether radioactive waste can be self-disposed of is important from an economic perspective because the self-disposal of the radioactive waste reduces the radioactive waste disposal cost.

In order to self-dispose of radioactive waste, it is required that a radioactivity concentration in the radioactive waste be within a permitted concentration. A regulatory agency regulates a regulatory agency's minimum detectable concentration (MDC) and permits self-disposal of radioactive waste only when a radioactivity concentration in the radioactive waste is lower than or equal to the regulatory agency's MDC.

In general, a minimum detectable concentration (MDC) of a measuring instrument capable of measuring a radioactivity concentration in radioactive waste (hereinafter referred to as a measuring instrument's MDC) has a larger value than the regulatory agency's MDC. Therefore, if radioactive waste has a radioactivity concentration lower than or equal to the measuring instrument's MDC, the self-disposal of the radioactive waste is not permitted.

This is because the radioactive waste having a radioactivity concentration lower than or equal to the measuring instrument's MDC includes radioactive waste having a radioactivity concentration higher than the regulatory agency's MDC and radioactive waste having a radioactivity concentration lower than or equal to the regulatory agency's MDC, but there is no way to distinguishably measure these radioactivity concentrations of radioactive wastes, and as a result, all of the radioactive waste is treated as being not permitted to be self-disposed of.

Therefore, there is a need to find a way to figure out a radioactivity concentration in radioactive waste lower than or equal to the measuring instrument's MDC, determine whether the radioactive waste has a radioactivity concentration higher than the regulatory agency's MDC, and permit self-disposal of the radioactive waste when the radioactive waste has a radioactivity concentration lower than or equal to the regulatory agency's MDC.

[Disclosure]

[Technical Problem]

An object of the present invention is to calculate a radioactivity concentration in radioactive waste lower than or equal to a measuring instrument's MDC.

Another object of the present invention is to determine whether radioactive waste having a radioactivity concentration lower than or equal to a measuring instrument's MDC is also lower than or equal to a regulatory agency's MDC to determine whether self-disposal of the radioactive waste is permitted.

The objects of the present invention are not limited to the aforementioned objects, and other objects that are not mentioned above will be clearly understood by those skilled in the art from the following description.

[Technical Solution]

In one general aspect, a method of calculating a radioactivity concentration in radioactive waste includes: a preparation step of preparing radioactive waste; an irradiation step of irradiating the radioactive waste with neutrons for a predetermined period of time; a measurement step of measuring a first radioactivity concentration in the radioactive waste irradiated with the neutrons; and a calculation step of calculating a second radioactivity concentration in the radioactive waste before the radioactive waste was irradiated with the neutrons, by putting the first radioactivity concentration into Formula 1.

The method may further include, between the measurement step and the calculation step: a determination step of determining whether the first radioactivity concentration is higher than a measuring instrument's MDC; and an additional irradiation step of additionally irradiating the radioactive waste with neutrons so that the first radioactivity concentration is higher than the measuring instrument's MDC when the first radioactivity concentration is lower than or equal to the measuring instrument's MDC, and measuring a first radioactivity concentration.

The method may further include, after the calculation step: a deciding step of determining whether the second radioactivity concentration is higher than a regulatory agency's MDC, and deciding that self-disposal of the radioactive waste is permitted when it is determined that the second radioactivity concentration is lower than or equal to the regulatory agency's MDC.

In another general aspect, a method of calculating a radioactivity concentration in radioactive waste includes: a preparation step of preparing radioactive waste; a first irradiation step of irradiating first radioactive waste, which is some of the radioactive waste, with neutrons for a first period of time; a first measurement step of measuring a first radioactivity concentration in the first radioactive waste irradiated with the neutrons for the first period of time; a second irradiation step of irradiating second radioactive waste, which is the other radioactive waste, with neutrons for a second period of time; a second measurement step of measuring a second radioactivity concentration in the second radioactive waste irradiated with the neutrons for the second period of time; and a calculation step of calculating a third radioactivity concentration in the radioactive waste before the radioactive waste was irradiated with the neutrons, by simultaneously solving a first equation obtained by putting the first radioactivity concentration into Formula 2 and a second equation obtained by putting the second radioactivity concentration into Formula 3.

The method may further include, between the second measurement step and the calculation step: a determination step of determining whether the first radioactivity concentration and the second radioactivity concentration are higher than a measuring instrument's MDC; and an additional irradiation step of additionally irradiating the first radioactive waste with neutrons so that the first radioactivity concentration is higher than the measuring instrument's MDC when the first radioactivity concentration is lower than or equal to the measuring instrument's MDC, additionally irradiating the second radioactive waste with neutrons so that the second radioactivity concentration is higher than the measuring instrument's MDC when the second radioactivity concentration is lower than or equal to the measuring instrument's MDC, and measuring a first radioactivity concentration and a second radioactivity concentration.

The method may further include, after the calculation step: a deciding step of determining whether the third radioactivity concentration is higher than a regulatory agency's MDC, and deciding that self-disposal of the radioactive waste is permitted when it is determined that the third radioactivity concentration is lower than or equal to the regulatory agency's MDC.

Details of other embodiments for solving the problems are included in the description of the invention and the drawings.

[Advantageous Effects]

By means of the technical solution to the problem as described above, the method of calculating a radioactivity concentration in radioactive waste according to the present invention provides an effect in that a radioactivity concentration in radioactive waste lower than or equal to a measuring instrument's MDC can be calculated, by irradiating the radioactive waste with neutrons for a predetermined period of time so that the radioactivity concentration in the radioactive waste is higher than the measuring instrument's MDC, and then calculating a radioactivity concentration in the radioactive waste before the radioactive waste was irradiated with the neutrons using a formula.

Since a radioactivity concentration in radioactive waste lower than or equal to the measuring instrument's MDC can be calculated, the method of calculating a radioactivity concentration in radioactive waste according to the present invention also provides an effect in that it can be determined whether the radioactive waste has a radioactivity concentration lower than or equal to a regulatory agency's MDC, making it possible to determine whether the self-dispose of the radioactive waste is permitted.

[Description of Drawings]

FIG. 1 is a flowchart illustrating a method of calculating a radioactivity concentration in radioactive waste according to a first embodiment of the present invention.
FIG. 2 is a flowchart illustrating a method of calculating a radioactivity concentration in radioactive waste according to a second embodiment of the present invention.

[Best Mode]

Hereinafter, embodiments of the present invention will be described in detail with reference to the accompanying drawings, so that they can be easily carried out by those of ordinary skill in the art to which the present invention pertains.

However, the present invention may be implemented in various different forms, and is not limited to the embodiments described herein. In order to clearly explain the present invention, parts irrelevant to the description will be omitted from the drawings, and like elements will be denoted by like reference numerals throughout the specification.

Throughout the specification, when one part is referred to as being "connected" to another part, the parts may be directly connected to each other, or the parts may be electrically connected to each other with an intervening element therebetween.

Throughout the specification, when one member is referred to as being positioned "on" another member, the members may be in contact with each other, or there may another member between the two members.

Also, throughout the specification, when a certain part is referred to as "including" a certain component, this implies the presence of other components, not precluding the presence of other components, unless explicitly stated to the contrary. Throughout the specification, terms of approximation, such as "about" and "substantially", are used to mean "equal to or close to" numerical values given with allowable manufacturing and material errors inherent in the stated meanings, and are used to prevent an unscrupulous infringer from unfairly using the disclosure where exact or absolute numerical values are stated to help understand the present invention. As used throughout the specification, the term "... step" or "step of ..." does not mean "step for ..."

Hereinafter, preferred embodiments of the present invention will be described in detail below with reference to the accompanying drawings. However, the present invention is not limited to the embodiments described herein, and may be embodied in other forms. Like reference signs denote like components throughout the specification.

Hereinafter, a method of calculating a radioactivity concentration in radioactive waste according to a first embodiment of the present invention will be described.

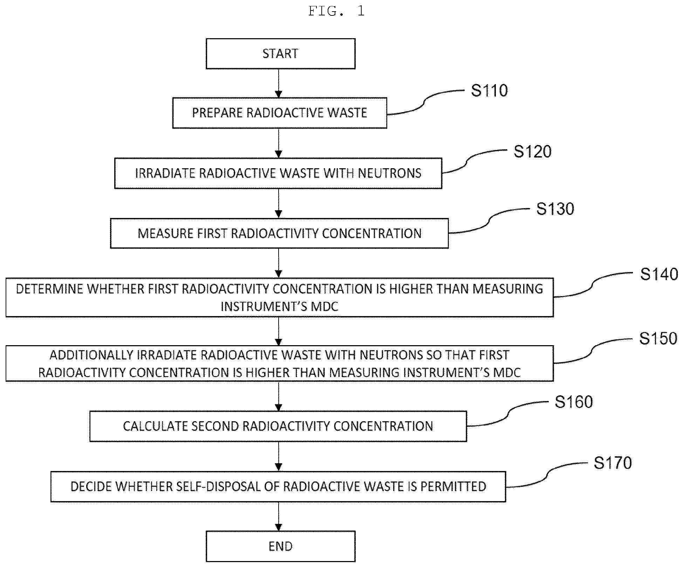

FIG. 1 is a flowchart illustrating a method of calculating a radioactivity concentration in radioactive waste according to a first embodiment of the present invention.

Referring to FIG. 1, the method of calculating a radioactivity concentration in radioactive waste according to the first embodiment includes a preparation step S110, an irradiation step S120, a measurement step S130, a determination step S140, an additional irradiation step S150, a calculation step S160, and a decision step S170.

First, the preparation step S110 will be described.

The preparation step S110 is a step of preparing radioactive waste. Here, the radioactive waste may be, for example, dismantled concrete waste generated during nuclear reactor decommissioning activities.

Next, the irradiation step S120 will be described.

The irradiation step S120 is a step of irradiating the prepared radioactive waste with neutrons for a predetermined period of time.

The irradiation of the radioactive waste with neutrons as described above increases the radioactivity concentration in the radioactive waste.

Next, the measurement step S130 will be described.

The measurement step S130 is a step of measuring a first radioactivity concentration, which is a radioactivity concentration in the radioactive waste irradiated with the neutrons.

At this time, a conventional method of measuring a radioactivity concentration in radioactive waste may be used as a method of measuring the radioactivity concentration in the radioactive waste.

Next, the determination step S140 will be described.

The determination step S140 is a step of determining whether the first radioactivity concentration is higher than a measuring instrument's MDC.

When the first radioactivity concentration determined in the determination step S140 is higher than the measuring instrument's MDC, the first radioactivity concentration can be measured through the measuring instrument. On the other hand, when the first radioactivity concentration determined in the determination step S140 is lower than or equal to the measuring instrument's MDC, the first radioactivity concentration cannot be measured through the measuring instrument, and thus, a follow-up action is necessary. The follow-up action is achieved through the additional irradiation step S150 to be described below.

Next, the additional irradiation step S150 will be described.

The additional irradiation step S150 is a step of additionally irradiating the radioactive waste with neutrons so that the first radioactivity concentration is higher than the measuring instrument's MDC and measuring a first radioactivity concentration, when the first radioactivity concentration determined in the determination step S140 is lower than or equal to the measuring instrument's MDC.

When the first radioactivity concentration determined in the determination step S140 is lower than or equal to the measuring instrument's MDC, it is necessary to take an action so that the first radioactivity concentration is higher than the measuring instrument's MDC. By additionally irradiating the radioactive waste with neutrons in the additional irradiation step S150, the first radioactivity concentration in the radioactive waste may be higher than the measuring instrument's MDC.

Then, when the first radioactivity concentration is higher than the measuring instrument's MDC, the first radioactivity concentration may be measured through the measuring instrument.

At this time, when the additional irradiation step S150 is performed once and the first radioactivity concentration is not higher than the measuring instrument's MDC, the additional irradiation step S150 may be performed multiple times so that the first radioactivity concentration is higher than the measuring instrument's MDC.

Next, the calculation step S160 will be described.

The calculation step S160 is a step of calculating a second radioactivity concentration, which is a radioactivity concentration in the radioactive waste before the radioactive waste was irradiated with the neutrons, by putting the first radioactivity concentration into Formula 1 below:

[Formula 1]

$$A = \frac{\lambda * \sigma * \phi}{\lambda - \sigma * \phi} * B * (e^{-\sigma * \phi * t} - e^{-\lambda * t}) + C * e^{-\lambda * t}$$

where A is the first radioactivity concentration, B is an initial radioactivity concentration of an isotope in the radioactive waste recorded in predetermined data, C is the second radioactivity concentration, $\lambda$ is a decay constant of a radioactive product, $\sigma$ is a radioactive cross section, $\phi$ is a neutron flux, and t is a predetermined period of time for which the radioactive waste is irradiated with the neutrons.

At this time, the first radioactivity concentration put into Formula 1 may be obtained by a measurement using the measuring instrument, and the initial radioactivity concentration of the isotope in the radioactive waste put into Formula 1 may be obtained using information recorded in the predetermined data.

For example, in a case where the radioactive waste is $^{94}$Nb contained in the nuclear reactor-decommissioned concrete and the isotope of the radioactive waste is $^{93}$Nb contained in the nuclear reactor-decommissioned concrete, an initial radioactivity concentration of $^{93}$Nb may be obtained using a radioactivity concentration of $^{93}$Nb recorded at the time of constructing a nuclear power plant.

This is because a magnitude of a neutron flux applied to concrete during the operation of the nuclear power plant is very small, and therefore, the initial radioactivity concentration of $^{93}$Nb contained in the nuclear reactor-decommissioned concrete may be considered to be the same as the radioactivity concentration of $^{93}$Nb at the time of constructing the nuclear power plant.

In this way, a second radioactivity concentration, which is a radioactivity concentration in the radioactive waste before the radioactive waste was irradiated with the neutrons, may be calculated by putting the first radioactivity concentration measured using the measuring instrument and the initial radioactivity concentration of the isotope in the radioactive waste recorded in the predetermined data into Formula 1.

Next, the decision step S170 will be described.

In the decision step S170, it is determined whether the second radioactivity concentration calculated in the calculation step S160 is higher than a regulatory agency's MDC.

Then, when it is determined that the second radioactivity concentration is higher than the regulatory agency's MDC, it may be decided that the self-disposal of the radioactive waste is not permitted, and when it is determined that the second radioactivity concentration is lower than or equal to the regulatory agency's MDC, it may be decided that the self-disposal of the radioactive waste is permitted.

Hereinafter, a method of calculating a radioactivity concentration in radioactive waste according to a second embodiment of the present invention will be described.

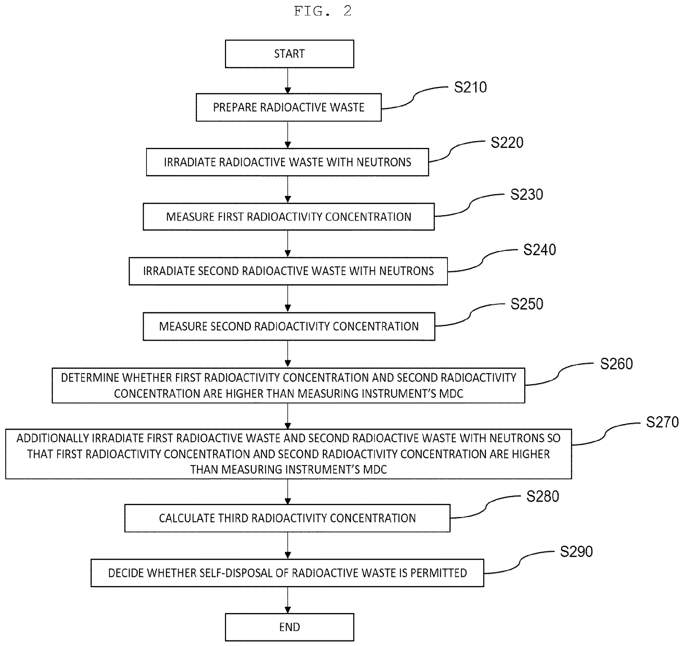

FIG. 2 is a flowchart illustrating a method of calculating a radioactivity concentration in radioactive waste according to a second embodiment of the present invention.

Referring to FIG. 2, the method of calculating a radioactivity concentration in radioactive waste according to the second embodiment includes a preparation step S210, a first irradiation step S220, a first measurement step S230, a second irradiation step S240, a second measurement step S250, a determination step S260, an additional irradiation step S270, a calculation step S280, and a decision step S290.

First, the preparation step S210 will be described.

The preparation step S210 is a step of preparing radioactive waste. Here, the radioactive waste may be, for example, dismantled concrete waste generated during nuclear reactor decommissioning activities.

Next, the first irradiation step S220 will be described.

The first irradiation step S220 is a step of irradiating first radioactive waste, which is some of the prepared radioactive waste, with neutrons for a first period of time.

The irradiation of the first radioactive waste with neutrons as described above increases the radioactivity concentration in the first radioactive waste.

Next, the first measurement step S230 will be described.

The first measurement step S230 is a step of measuring a first radioactivity concentration, which is a radioactivity concentration in the first radioactive waste irradiated with the neutrons.

At this time, a conventional method of measuring a radioactivity concentration in radioactive waste may be used as a method of measuring the radioactivity concentration in the first radioactive waste.

Next, the second irradiation step S240 will be described.

The second irradiation step S240 is a step of irradiating second radioactive waste, which is the prepared radioactive waste, with neutrons for a second period of time.

The irradiation of the second radioactive waste with neutrons as described above increases the radioactivity concentration in the second radioactive waste.

Next, the second measurement step S250 will be described.

The second measurement step S250 is a step of measuring a second radioactivity concentration, which is a radioactivity concentration in the second radioactive waste irradiated with the neutrons.

At this time, a conventional method of measuring a radioactivity concentration in radioactive waste may be used as a method of measuring the radioactivity concentration in the second radioactive waste.

Next, the determination step S260 will be described.

The determination step S260 is a step of determining whether the first radioactivity concentration and the second radioactivity concentration are higher than a measuring instrument's MDC.

When the first radioactivity concentration and the second radioactivity concentration determined in the determination step S260 are higher than the measuring instrument's MDC, the first radioactivity concentration and the second radioactivity concentration can be measured through the measuring instrument.

On the other hand, when the first radioactivity concentration determined in the determination step S260 is lower than or equal to the measuring instrument's MDC or the second radioactivity concentration determined in the determination step S260 is lower than or equal to the measuring instrument's MDC, the first radioactivity concentration or the second radioactivity concentration cannot be measured through the measuring instrument, and thus, a follow-up action is necessary. The follow-up action is achieved through the additional irradiation step S270 to be described below.

Next, the additional irradiation step S270 will be described.

The additional irradiation step S270 is a step of additionally irradiating the first radioactive waste with neutrons so that the first radioactivity concentration is higher than the measuring instrument's MDC when the first radioactivity concentration determined in the determination step S260 is lower than or equal to the measuring instrument's MDC, and measuring a first radioactivity concentration.

Furthermore, the additional irradiation step S270 is a step of additionally irradiating the second radioactive waste with neutrons so that the second radioactivity concentration is higher than the measuring instrument's MDC when the second radioactivity concentration determined in the determination step S260 is lower than or equal to the measuring instrument's MDC, and measuring a second radioactivity concentration.

When the first radioactivity concentration or the second radioactivity concentration determined in the determination step S260 is lower than or equal to the measuring instrument's MDC, it is necessary to take an action so that both the first radioactivity concentration and the second radioactivity concentration are higher than the measuring instrument's MDC. By additionally irradiating the first radioactive waste or the second radioactive waste with neutrons in the additional irradiation step S270, both the first radioactivity concentration and the second radioactivity concentration may be higher than the measuring instrument's MDC.

Then, when both the first radioactivity concentration and the second radioactivity concentration are higher than the measuring instrument's MDC, the first radioactivity concentration and the second radioactivity concentration may be measured through the measuring instrument.

At this time, when the additional irradiation step S270 is performed once and both the first radioactivity concentration and the second radioactivity concentration are not higher than the measuring instrument's MDC, the additional irradiation step S270 may be performed multiple times so that both the first radioactivity concentration and the second radioactivity concentration are higher than the measuring instrument's MDC.

Next, the calculation step S280 will be described.

The calculation step S280 is a step of calculating a third radioactivity concentration in the radioactive waste before the radioactive waste was irradiated with the neutrons, by simultaneously solving a first equation obtained by putting the first radioactivity concentration into Formula 2 below and a second equation obtained by putting the second radioactivity concentration into Formula 3 below:

[Formula 2]

$$A(t_1) = \frac{\lambda * \sigma * \phi}{\lambda - \sigma * \phi} * B * (e^{-\sigma * \varphi * t1} - e^{-\lambda * t1}) + C * e^{-\lambda * t1}$$

where $A(t_1)$ is the first radioactivity concentration, B is an initial radioactivity concentration of an isotope in the radioactive waste, C is the third radioactivity concentration, $\lambda$ is a decay constant of a radioactive product, $\sigma$ is a radioactive cross section, $\phi$ is a neutron flux, and $t_1$ is the first period of time,

[Formula 3]

$$A(t_2) = \frac{\lambda * \sigma * \phi}{\lambda - \sigma * \phi} * B * (e^{-\sigma * \varphi * t2} - e^{-\lambda * t2}) + C * e^{-\lambda * t2}$$

where $A(t_2)$ is the second radioactivity concentration, B is the initial radioactivity concentration of the isotope in the radioactive waste, C is the third radioactivity concentration, $\lambda$ is the decay constant of the radioactive product, $\sigma$ is the radioactive cross section, $\phi$ is the neutron flux, and $t_2$ is the second period of time.

At this time, the first radioactivity concentration put into Formula 2 and the second radioactivity concentration put into Formula 3 may be obtained by measurements using the measuring instrument.

In addition, when the first radioactivity concentration is put into Formula 2, the initial radioactivity concentration of the isotope in the radioactive waste and the third radioactivity concentration become unknown, and when the second radioactivity concentration is put into Formula 3, the initial radioactivity concentration of the isotope in the radioactive waste and the third radioactivity concentration become unknown.

That is, since the equations obtained through Formulas 2 and 3 are two equations, i.e., the first equation and the second equation, and two unknowns are included in the first equation and the second equation, the third radioactivity concentration in the radioactive waste may be calculated before the radioactive waste was irradiated with the neutrons by simultaneously solving the first and second equations.

Next, the decision step S290 will be described.

In the decision step S290, it may be determined whether the third radioactivity concentration calculated in the calculation step S280 is higher than the regulatory agency's MDC.

In addition, when it is determined that the third radioactivity concentration is higher than the regulatory agency's MDC, it may be decided that the self-disposal of the radioactive waste is not permitted, and when it is determined that the third radioactivity concentration is lower than or equal to the regulatory agency's MDC, it may be decided that the self-disposal of the radioactive waste is permitted.

Hereinafter, the operation and effect of the method of calculating a radioactivity concentration in radioactive waste according to the present invention will be described.

Radioactive waste is prepared, and the prepared radioactive waste is irradiated with neutrons for a predetermined period of time. At this time, when a radioactivity concentration in the radioactive waste irradiated with the neutrons for the predetermined period of time is lower than or equal to the measuring instrument's MDC, the radioactive waste may be additionally irradiated with neutrons so that the radioactivity concentration in the radioactive waste is higher than the measuring instrument's MDC.

Next, a radioactivity concentration in the radioactive waste irradiated with the neutrons is measured, and then a radioactivity concentration in the radioactive waste before the radioactive waste was irradiated with the neutrons is calculated by putting the measured radioactivity concentration in the radioactive waste into Formula 1.

On the other hand, in a case where a first radioactivity concentration and a second radioactivity concentration are measured by irradiating first radioactive waste and second radioactive waste of the radioactive waste with neutrons, a first equation and a second equation may be obtained by putting the measured first and second radioactivity concentrations into Formulas 2 and 3, respectively, and a radioactivity concentration in the radioactive waste before the radioactive waste was irradiated with the neutrons may be calculated by simultaneously solving the obtained first and second equations.

In addition, it is determined whether the calculated radioactivity concentration in the radioactive waste before the radioactive waste was irradiated with the neutrons is higher than the regulatory agency's MDC, it is decided that the self-disposal of the radioactive waste is permitted when the radioactivity concentration in the radioactive waste before the radioactive waste was irradiated with the neutrons is lower than or equal to the regulatory agency's MDC.

The method of calculating a radioactivity concentration in radioactive waste according to the present invention as described above provides an effect in that a radioactivity concentration in radioactive waste lower than or equal to a measuring instrument's MDC can be calculated, by irradiating the radioactive waste with neutrons for a predetermined period of time so that the radioactivity concentration in the radioactive waste is higher than the measuring instrument's MDC, and then calculating a radioactivity concentration in the radioactive waste before the radioactive waste was irradiated with the neutrons using a formula.

Since a radioactivity concentration in radioactive waste lower than or equal to the measuring instrument's MDC can be calculated, the method of calculating a radioactivity concentration in radioactive waste according to the present invention also provides an effect in that it can be determined whether the radioactive waste has a radioactivity concentration lower than or equal to a regulatory agency's MDC, making it possible to determine whether the self-dispose of the radioactive waste is permitted.

[Detailed Description of Main Elements]

S110: Preparation step
S120: Irradiation step
S130: Measurement step
S140: Determination step
S150: Additional irradiation step
S160: Calculation step
S170: Decision step

**Claims**

1. A method of calculating a radioactivity concentration in radioactive waste, the method comprising:

a preparation step of preparing radioactive waste;
an irradiation step of irradiating the radioactive waste with neutrons for a predetermined period of time;
a measurement step of measuring a first radioactivity concentration in the radioactive waste irradiated with the neutrons; and
a calculation step of calculating a second radioactivity concentration in the radioactive waste before the radioactive waste was irradiated with the neutrons, by putting the first radioactivity concentration into Formula 1 below:

[Formula 1]

$$A = \frac{\lambda * \sigma * \phi}{\lambda - \sigma * \phi} * B * (e^{-\sigma * \phi * t} - e^{-\lambda * t}) + C * e^{-\lambda * t}$$

where A is the first radioactivity concentration, B is an initial radioactivity concentration of an isotope in the radioactive waste recorded in predetermined data, C is the second radioactivity concentration, $\lambda$ is a decay constant of a radioactive product, $\sigma$ is a radioactive cross section, $\phi$ is a neutron flux, and t is a predetermined period of time for which the radioactive waste is irradiated with the neutrons.

2. The method of claim 1, further comprising, between the measurement step and the calculation step:

a determination step of determining whether the first radioactivity concentration is higher than a measuring instrument's MDC; and
an additional irradiation step of additionally irradiating the radioactive waste with neutrons so that the first radioactivity concentration is higher than the measuring instrument's MDC when the first radioactivity concentration is lower than or equal to the measuring instrument's MDC, and measuring a first radioactivity concentration.

3. The method of claim 2, further comprising, after the calculation step:
a deciding step of determining whether the second radioactivity concentration is higher than a regulatory agency's MDC, and deciding that self-disposal of the radioactive waste is permitted when it is determined that the second radioactivity concentration is lower than or equal to the regulatory agency's MDC.

4. A method of calculating a radioactivity concentration in radioactive waste, the method comprising:

a preparation step of preparing radioactive waste;

a first irradiation step of irradiating first radioactive waste, which is some of the radioactive waste, with neutrons for a first period of time;

a first measurement step of measuring a first radioactivity concentration in the first radioactive waste irradiated with the neutrons for the first period of time;

a second irradiation step of irradiating second radioactive waste, which is the other radioactive waste, with neutrons for a second period of time;

a second measurement step of measuring a second radioactivity concentration in the second radioactive waste irradiated with the neutrons for the second period of time; and

a calculation step of calculating a third radioactivity concentration in the radioactive waste before the radioactive waste was irradiated with the neutrons, by simultaneously solving a first equation obtained by putting the first radioactivity concentration into Formula 2 below and a second equation obtained by putting the second radioactivity concentration into Formula 3 below:

[Formula 2]

$$A(t_1) = \frac{\lambda * \sigma * \phi}{\lambda - \sigma * \phi} * B * (e^{-\sigma * \phi * t1} - e^{-\lambda * t1}) + C * e^{-\lambda * t1}$$

where $A(t_1)$ is the first radioactivity concentration, B is an initial radioactivity concentration of an isotope in the radioactive waste, C is the third radioactivity concentration, X is a decay constant of a radioactive product, $\sigma$ is a radioactive cross section, $\phi$ is a neutron flux, and $t_1$ is the first period of time,

[Formula 3]

$$A(t_2) = \frac{\lambda * \sigma * \phi}{\lambda - \sigma * \phi} * B * (e^{-\sigma * \phi * t2} - e^{-\lambda * t2}) + C * e^{-\lambda * t2}$$

where $A(t_2)$ is the second radioactivity concentration, B is the initial radioactivity concentration of the isotope in the radioactive waste, C is the third radioactivity concentration, $\lambda$ is the decay constant of the radioactive product, $\sigma$ is the radioactive cross section, $\phi$ is the neutron flux, and $t_2$ is the second period of time.

5. The method of claim 4, further comprising, between the second measurement step and the calculation step:

a determination step of determining whether the first radioactivity concentration and the second radioactivity concentration are higher than a measuring instrument's MDC; and

an additional irradiation step of additionally irradiating the first radioactive waste with neutrons so that the first radioactivity concentration is higher than the measuring instrument's MDC when the first radioactivity concentration is lower than or equal to the measuring instrument's MDC, additionally irradiating the second radioactive waste with neutrons so that the second radioactivity concentration is higher than the measuring instrument's MDC when the second radioactivity concentration is lower than or equal to the measuring instrument's MDC, and measuring a first radioactivity concentration and a second radioactivity concentration.

6. The method of claim 5, further comprising, after the calculation step:

a deciding step of determining whether the third radioactivity concentration is higher than a regulatory agency's MDC, and deciding that self-disposal of the radioactive waste is permitted when it is determined that the third radioactivity concentration is lower than or equal to the regulatory agency's MDC.

FIG. 1

```
            ┌─────────────────────┐
            │        START        │
            └─────────────────────┘
                       │
                       ▼
        ┌───────────────────────────────┐           S110
        │   PREPARE RADIOACTIVE WASTE    │
        └───────────────────────────────┘
                       │
                       ▼
     ┌─────────────────────────────────────┐        S120
     │ IRRADIATE RADIOACTIVE WASTE WITH NEUTRONS │
     └─────────────────────────────────────┘
                       │
                       ▼
     ┌─────────────────────────────────────┐        S130
     │ MEASURE FIRST RADIOACTIVITY CONCENTRATION │
     └─────────────────────────────────────┘
                       │
                       ▼
  ┌────────────────────────────────────────────────┐  S140
  │ DETERMINE WHETHER FIRST RADIOACTIVITY CONCENTRATION IS HIGHER THAN MEASURING │
  │                   INSTRUMENT'S MDC              │
  └────────────────────────────────────────────────┘
                       │
                       ▼
  ┌────────────────────────────────────────────────┐  S150
  │ ADDITIONALLY IRRADIATE RADIOACTIVE WASTE WITH NEUTRONS SO THAT FIRST │
  │ RADIOACTIVITY CONCENTRATION IS HIGHER THAN MEASURING INSTRUMENT'S MDC │
  └────────────────────────────────────────────────┘
                       │
                       ▼
     ┌─────────────────────────────────────┐        S160
     │ CALCULATE SECOND RADIOACTIVITY CONCENTRATION │
     └─────────────────────────────────────┘
                       │
                       ▼
  ┌────────────────────────────────────────────────┐  S170
  │ DECIDE WHETHER SELF-DISPOSAL OF RADIOACTIVE WASTE IS PERMITTED │
  └────────────────────────────────────────────────┘
                       │
                       ▼
            ┌─────────────────────┐
            │         END         │
            └─────────────────────┘
```

FIG. 2

```
                    ┌──────────────┐
                    │    START     │
                    └──────┬───────┘
                           ▼
              ┌────────────────────────────┐
              │  PREPARE RADIOACTIVE WASTE  │────── S210
              └────────────┬───────────────┘
                           ▼
          ┌────────────────────────────────────┐
          │ IRRADIATE RADIOACTIVE WASTE WITH    │────── S220
          │           NEUTRONS                  │
          └────────────────┬───────────────────┘
                           ▼
          ┌────────────────────────────────────┐
          │ MEASURE FIRST RADIOACTIVITY         │────── S230
          │        CONCENTRATION                │
          └────────────────┬───────────────────┘
                           ▼
       ┌───────────────────────────────────────────┐
       │ IRRADIATE SECOND RADIOACTIVE WASTE WITH    │────── S240
       │              NEUTRONS                       │
       └────────────────────┬──────────────────────┘
                           ▼
       ┌───────────────────────────────────────────┐
       │ MEASURE SECOND RADIOACTIVITY CONCENTRATION │────── S250
       └────────────────────┬──────────────────────┘
                           ▼
  ┌──────────────────────────────────────────────────────────┐
  │ DETERMINE WHETHER FIRST RADIOACTIVITY CONCENTRATION AND   │────── S260
  │ SECOND RADIOACTIVITY CONCENTRATION ARE HIGHER THAN        │
  │ MEASURING INSTRUMENT'S MDC                                │
  └───────────────────────────┬──────────────────────────────┘
                           ▼
  ┌──────────────────────────────────────────────────────────┐
  │ ADDITIONALLY IRRADIATE FIRST RADIOACTIVE WASTE AND SECOND │────── S270
  │ RADIOACTIVE WASTE WITH NEUTRONS SO THAT FIRST             │
  │ RADIOACTIVITY CONCENTRATION AND SECOND RADIOACTIVITY      │
  │ CONCENTRATION ARE HIGHER THAN MEASURING INSTRUMENT'S MDC  │
  └───────────────────────────┬──────────────────────────────┘
                           ▼
       ┌───────────────────────────────────────────┐
       │ CALCULATE THIRD RADIOACTIVITY CONCENTRATION│────── S280
       └────────────────────┬──────────────────────┘
                           ▼
   ┌──────────────────────────────────────────────────────┐
   │ DECIDE WHETHER SELF-DISPOSAL OF RADIOACTIVE WASTE IS   │────── S290
   │                  PERMITTED                             │
   └────────────────────────┬─────────────────────────────┘
                           ▼
                    ┌──────────────┐
                    │     END      │
                    └──────────────┘
```

# EP 4 481 444 A1

<table>
<tr><td colspan="2" align="center"><strong>INTERNATIONAL SEARCH REPORT</strong></td><td>International application No.<br><br><strong>PCT/KR2023/004920</strong></td></tr>
</table>

**A. CLASSIFICATION OF SUBJECT MATTER**

**G01T 1/167**(2006.01)i; **G01T 3/00**(2006.01)i; **G06F 17/10**(2006.01)i; **G21F 9/34**(2006.01)i

According to International Patent Classification (IPC) or to both national classification and IPC

**B. FIELDS SEARCHED**

Minimum documentation searched (classification system followed by classification symbols)

G01T 1/167(2006.01); G01N 23/222(2006.01); G01N 23/223(2006.01); G01T 3/00(2006.01); G01T 3/06(2006.01); G01T 7/02(2006.01); G06Q 50/26(2012.01); G21C 17/00(2006.01); G21F 9/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중성자(neutron), 조사(irradiation), 노출(expose), 방사선(radioactive), 폐기물(waste), 시간(time)

**C. DOCUMENTS CONSIDERED TO BE RELEVANT**

| Category* | Citation of document, with indication, where appropriate, of the relevant passages | Relevant to claim No. |
|---|---|---|
| Y | JP 07-209493 A (TOSHIBA CORP.) 11 August 1995 (1995-08-11)<br>See paragraphs [0025]-[0030] and claim 1. | 1-2 |
| A | | 3-6 |
| Y | KR 10-2298486 B1 (KOREA INSTITUTE OF GEOSCIENCE AND MINERAL RESOURCES(KIGAM)) 06 September 2021 (2021-09-06)<br>See paragraphs [0033]-[0040] and claim 1. | 1-2 |
| A | KR 10-2041366 B1 (KNDT&I CO., LTD.) 06 November 2019 (2019-11-06)<br>See paragraphs [0063]-[0073]. | 1-6 |
| A | JP 2004-037106 A (TOSHIBA CORP.) 05 February 2004 (2004-02-05)<br>See paragraphs [0018]-[0024] and figure 1. | 1-6 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/004920** |

**C. DOCUMENTS CONSIDERED TO BE RELEVANT**

| Category* | Citation of document, with indication, where appropriate, of the relevant passages | Relevant to claim No. |
|---|---|---|
| A | US 4841153 A (WORMALD, Malcolm R.) 20 June 1989 (1989-06-20)<br>    See claims 1-5 and figure 1. | 1-6 |
| E | KR 10-2023-0127410 A (KOREA ATOMIC ENERGY RESEARCH INSTITUTE) 01 September 2023 (2023-09-01)<br>    See claims 1-6 and figures 1-2. | 1-6 |

Form PCT/ISA/210 (second sheet) (July 2022)

**INTERNATIONAL SEARCH REPORT**
Information on patent family members

International application No.

**PCT/KR2023/004920**

| Patent document cited in search report | | | Publication date (day/month/year) | Patent family member(s) | | | Publication date (day/month/year) |
|---|---|---|---|---|---|---|---|
| JP | 07-209493 | A | 11 August 1995 | None | | | |
| KR | 10-2298486 | B1 | 06 September 2021 | None | | | |
| KR | 10-2041366 | B1 | 06 November 2019 | None | | | |
| JP | 2004-037106 | A | 05 February 2004 | JP | 4091358 | B2 | 28 May 2008 |
| US | 4841153 | A | 20 June 1989 | AT | E60134 | T1 | 15 February 1991 |
| | | | | AU | 5018790 | A | 21 June 1990 |
| | | | | AU | 596992 | B2 | 24 May 1990 |
| | | | | AU | 620696 | B2 | 20 February 1992 |
| | | | | AU | 6279886 | A | 19 March 1987 |
| | | | | CA | 1259708 | A | 19 September 1989 |
| | | | | EP | 0227216 | A1 | 01 July 1987 |
| | | | | EP | 0227216 | B1 | 16 January 1991 |
| | | | | GB | 2180643 | A | 01 April 1987 |
| | | | | GB | 2180643 | B | 02 May 1990 |
| | | | | GB | 2219854 | A | 20 December 1989 |
| | | | | GB | 2219854 | B | 02 May 1990 |
| | | | | JP | 2591735 | B2 | 19 March 1997 |
| | | | | JP | 62-115351 | A | 27 May 1987 |
| | | | | ZA | 866868 | B | 30 November 1988 |
| KR | 10-2023-0127410 | A | 01 September 2023 | None | | | |

Form PCT/ISA/210 (patent family annex) (July 2022)